Europäisches Patentamt

European Patent Office

Office européen des brevets

(11) Veröffentlichungsnummer : **0 071 209**
**B1**

(12) **EUROPÄISCHE PATENTSCHRIFT**

(45) Veröffentlichungstag der Patentschrift :
17.07.85

(51) Int. Cl.⁴ : **D 04 H 13/00, B 28 B 1/52,**
**B 29 D 3/02**

(21) Anmeldenummer : 82106677.6

(22) Anmeldetag : 23.07.82

(54) **Verfahren zur Herstellung von faserverstärkten, ein verfestigbares Bindemittel enthaltenden, flächigen Körpern.**

(30) Priorität : 29.01.82 CH 550/82
27.07.81 DE 3129509

(43) Veröffentlichungstag der Anmeldung :
09.02.83 Patentblatt 83/06

(45) Bekanntmachung des Hinweises auf die Patenterteilung : 17.07.85 Patentblatt 85/29

(84) Benannte Vertragsstaaten :
AT BE CH DE FR GB IT LI LU NL SE

(56) Entgegenhaltungen :
DE-A- 1 560 651
DE-A- 1 560 771
DE-B- 2 701 469
FR-A- 1 397 996
FR-A- 1 463 565
FR-A- 1 574 279
FR-A- 2 203 897
FR-A- 2 204 502
GB-A-   440 064
US-A- 2 094 148
US-A- 2 314 162
US-A- 2 429 486
US-A- 3 415 713
US-A- 3 448 502
US-A- 3 476 626
US-A- 4 199 635

(73) Patentinhaber : Tesch, Günter Horst
Avenue Jean-Marie-Musy 15
CH-1700 Fribourg (CH)

(72) Erfinder : Tesch, Günter Horst
Avenue Jean-Marie-Musy 15
CH-1700 Fribourg (CH)

(74) Vertreter : Lesser, Karl-Bolko, Dipl.-Ing.
European Patent Attorney Johanneskirchnerstrasse
149a
D-8000 München 81 (DE)

## Beschreibung

Die Erfindung betrifft ein Verfahren zur Herstellung von faserverstärkten, ein verfestigbares Bindemittel enthaltenden, flächigen Körpern gemäss Oberbegriff des Anspruches 1.

In der DE-A-30 19 917 werden verschiedene Verfahren zur Herstellung von faserverstärkten Gipsplatten beschrieben.

Unter Verweis auf die GB-A-772 581 wird ein Verfahren beschrieben, bei dem ein Glasfasergewebe durch einen Gipsschlamm hindurchgeführt wird, auf den eine Schicht aus Schlamm aufgebracht und auf diese ein zweites getränktes Glasfasergewebe aufgelegt wird, worauf der so gebildete Schichtkörper aushärtet. Gemäss einem anderer Verfahren werden anstelle der bischer verwendeten Papierverkleidungen nun miteinander verflochtene, mineralische Fasern angewandt.

Bei einem dritten Verfahren zur Herstellung von Gipsplatten wird ein Gipsschlamm auf einen Streifen aus anorganischen Fasern auf einen Förderer aufgebracht, darauf ein zweiter Streifen aus gleichen Fasern aufgebracht und die Gesamtheit zwischen Walzen zusammengedrückt, damit der Schlamm in die fasrigen Streifen an den Oberflächen der Schlammasse eindringt. Gemäss einem weiteren dort beschriebenen Verfahren wird eine mehrschichtige Gipsplatte dadurch hergestellt, dass ein Kern aus Gips und Verstärkungsfasern auf einer Seite mit einem Streifen aus Glasfaservlies oder Carton und auf der anderen Seite mit einem Glasfasergewebe oder einem Streifen aus Glasfaservlies, Carton, Folie oder Papier verkleidet wird.

Gemäss der DE-A-30 19 917 haben all diese Verfahren den Nachteil, dass der Gipsschlamm nicht vollständig in die beiden aussenliegenden Schichten hineindringt, bzw. sie nicht vollständig durchdringt. In der DE-A-30 19 917 wird deshalb vorgeschlagen, den Gipsschlamm auf eine durchlässige Bahn, insbesondere eine aus Glasfasern bestehende Bahn aufzutragen, darauf eine zweite Bahn aufzulegen und diesen dreischichtigen Körper zwischen zwei Auflageflächen in Vibration zu versetzen, wobei dann der Schlamm durch die Bahn hindurchdringt und eine dünne, durchgehende Schicht auf der Aussenfläche der Bahn gebildet wird.

Diesen bekannten Verfahren ist gemeinsam, dass der noch nichtverfestigte Schichtkörper keinen inneren Zusammenhalt hat, insbesondere die Schichten gegeneinander verrutschen können. Aus diesem Grunde muss der bahnförmige Schichtkörper bis zum Verfestigen des Gipses durch einen Träger gestützt horizontal bewegt und gelagert werden. Ein solcher, noch nichtverfestigter Schichtkörper kann auch nicht geformt werden, da sich dann die schlammige Kernschicht, insbesondere in ihrer Dicke, verungleichmässigt.

Die Anbindung der beiden aussen liegenden Schichten an die Kernschicht ist bei diesem bekannten Schichtkörper auch im verfestigten Zustand nicht allzu gross, wodurch dann, wenn eine solche Platte auf Biegung beansprucht wird, sich die gedehnte Aussenschicht von der Kernschicht löst und reisst, wodurch die Faserverstärkung zerstört ist, was zu einem Brechen der Kernschicht führt.

Der Erfindung liegt nun die Aufgabe zugrunde, ein gattungsgemässes Verfahren zu schaffen, bei dem die drei Schichten schon im nichtverfestigten Zustand einen eigenen inneren Zusammenhalt aufweisen, der im verfestigten Zustand zu besseren mechanischen Eigenschaften des Körpers führt.

Diese Aufgabe wird durch den Gegenstand des Anspruches 1 gelöst. Zur Lösung dieser Aufgabe wird das aus der Textiltechnik bekannte Verfahren des Vernadelns herangezogen.

Beim sogenannten Vernadeln werden aus einer auf eine andere Schicht aufgelegten, faserhaltigen Schicht mittels mit Widerhaken versehener Nadeln Einzelfasern oder Faserbüschel in diese andere Schicht hineingestochen, in der sie beim Zurückziehen der Nadeln stecken bleiben und dadurch die Verbindung der faserhaltigen Schicht mit der anderen Schicht herbeiführen. Voraussetzung zur Durchführung der Technik des Vernadelns ist somit das Vorhandensein einer Schicht aus « aktiv nadelfähigen Stoffen », d. h. einer Schicht, welche aus zur Durchführung des Nadelprozesses heranziehbaren, faserförmigen Gebilden besteht oder derartige Gebilde enthält. Die andere Schicht, in die die aktiv nadelbaren Fasern eingebracht werden, muss mindestens passiv nadelbar sein, d. h., sie muss die in sie eingestochenen Fasern halten können.

Eine solche passiv nadelbare Schicht kann selbst aktiv nadelfähig sein, passiv nadelbare Schichten können aber auch bekannterweise durch Kunststoffolien, Papier oder dergleichen gebildet sein. Es hat sich nun überraschenderweise herausgestellt, dass auch verfestigbare, zähflüssige Massen, wie aushärtende Zement-, Beton-, Gips- oder Kalkmassen, aushärtende oder auszuvulkanisierende, zähflüssige Kautschukmassen, aushärtende, zähflüssige Bitumenmassen oder auch zähflüssige noch auszuhärtende Kunstharzmassen oder dergleichen passiv nadelfähig sind.

Man kann aber auch eine Kunststoffmasse in trockener, pulverförmiger Form, z. B. eine oder beide Komponenten eines Zweikomponenten-Systems, insbesondere Zweikomponentenbindemittels, als Kernschicht einbringen und entweder die zweite Komponente in flüssiger oder gasförmiger Form nach dem Vernadeln einbringen und/oder erst nach dem Vernadeln unter Wärme und/oder Druck aushärten.

Durch das Vernadeln des aus den einzelnen Schichten bestehenden, noch nichtverfestigten Schichtkörpers können sehr schnell eine Vielzahl von Haltefasern in relativ grosser Dichte in den Schichtkörper eingebracht werden und zusätzlich werden durch die Vibrationen beim Nadelprozess in der Nadelmaschine Teile dieser Massen aus der Kernschicht heraus in die Fasern enthaltende Schicht hineingebracht, ohne dass es dazu eigener Vibratoren bedarf. Gegebenenfalls in der Kernschicht vorhandene Füllstoffe, wie Sand, Polystyrolkügelchen, granulierte Gummiabfälle oder dergleichen werden jedoch am Eintreten in die bzw. am Durchdringen der Aussenschichten gehindert.

Der so gebildete mattenförmige Schichtkörper hat einen eigenenen inneren Zusammenhalt und kann nun auch ohne Trag und/oder Stützfläche — freischwebend — gehandhabt werden. Im noch nichtverfestigten Zustand läßt sich ein solcher flächiger Schichtkörper senkrecht ausrichten und kann dann z. B. um schon in einem Bauwerk eingebaute Stahl- oder Holzstützträger herumgewickelt und gegebenenfalls auf diese geschraubt oder genagelt werden, es ist aber auch möglich, einen solchen mattenförmigen Schichtkörper an einer nackten Betonfläche anzuheften, worauf sich dieser Schichtkörper dann an dieser Betonfläche als Putzersatz angeheftet, an ihr praktisch anklebend, verfestigt.

Im verfestigten Zustand des vernadelten, verfestigten Körpers geben die vernadelten Fasern dem Körper eine gegenüber der Elastizität der verfestigten Kernschicht veränderte Elastizität.

Man müsste nun annehmen, dass durch das Einnadeln der Haltefasern durch die Kernschicht hindurch Schwächungsstellen im verfestigten Schichtkörper vorhanden sind ; es hat sich nun aber überraschenderweise herausgestellt, dass ein nach dem erfindungsgemässen Verfahren hergestellter Schichtkörper mechanische Eigenschaften aufweist, insbesondere was die Schlagfestigkeit, das Arbeitsaufnahmevermögen und auch die Dehnung angeht, die den Eigenschaften der nach den bekannten Verfahren hergestellten Schichtkörper mindestens ebenbürtig sind, diese teilweise noch übertreffen.

Bei Untersuchungen wurde festgestellt, dass dann, wenn die bekannten Schichtkörper auf Biegung belastet werden, sich die Aussenschichten von der Kernschicht lösen und der Körper im Bereich der grössten Belastung bricht. Bei den nach dem erfindungsgemässen Verfahren hergestellten Schichtkörpern dagegen tritt ein solches Lösen der Aussenschichten von der Kernschicht auch bei grösserer Durchbiegung nicht auf. Die mittlere, das Bindemittel und gegebenenfalls die Füllstoffe enthaltende Kernschicht wird von mindestens einer der beiden aussenliegenden, Fasern und Bindemittel enthaltenden Schichten entnommenen Haltefasern durchdrungen, die in dieser Kernschicht und in der anderen Schicht nach dem Verfestigen und Abbinden des Bindemittels fest eingelagert sind. Durch diese Haltefasern erhält man eine Verklammerung der drei Schichten untereinander, die nur sehr schwer wieder aufbrechbar ist und durch die die Festigkeitseigenschaften aller drei Schichten ausgenutzt werden.

Wenngleich hier als aktiv nadelbare Fasern, in Form von Einzelfasern, Filamenten oder Fäden, aber auch lockeren Spunbonds, z. B. herkömmliche Synthesefasern aus Polyester, Polyamid, Polypropylen oder dergleichen oder natürliche Fasern, wie Sisal, Leinen, Baumwolle oder dergleichen verwendet werden können, weist ein verfestigter, abgebundener, nach dem erfindungsgemässen Verfahren hergestellter, plattenförmiger Körper gleich gute bis bessere mechanische Eigenschaften auf, als eine nach den herkömmlichen Verfahren hergestellte, faserverstärkte Platte.

Die zweite Aussenschicht, die mindestens passiv vernadelbar sein muss, kann aus denselben Fasern bestehen, es kann dafür aber auch ein Gewebe, ein Gewirke, ein Spunbond, Folien aus Kunststoff oder Papier oder dergleichen verwendet werden.

Während die Glasfaserbeton- und die Faserzemententwicklung darauf hinsteuert, die Elastizitätsmodule der Fasern und der Betonmischungen einander immer mehr anzunähern, wurde festgestellt, dass eine solche Annäherung dann nicht notwendig ist, wenn erfindungsgemäss vorgegangen wird, wobei gegenüber den bekannten Verfahren nun Fasern verwendet werden, die darüberhinaus um ein Vielfaches länger sind, als die bisher verwendeten Einzelfasern.

Besonders gute Festigkeitseigenschaften lassen sich erzielen, wenn nicht, wie in der Textil-Nadelfilztechnik meist üblich, senkrecht zur Flächenerstreckung des Körpers vernadelt wird, sondern schräg dazu. Hydraulische Bindemittel enthaltende flächige Körper haben bei überhohen Biegebeanspruchungen die Neigung in senkrecht zur Erstreckungsebene der Körper liegenden Ebenen zu brechen. Sind nun die Haltefasern senkrecht zur Erstreckungsebene des Körpers ausgerichtet, so besteht leicht die Gefahr, dass sich solche Bruchebenen entlang einer Reihe von Haltefasern ausbilden. Bei schräger Anordnung der Haltefasern, insbesondere, wenn diese von zwei Seiten her, jeweils unter einem Winkel von 45° eingestossen wurden und dann windschief zueinander liegen, tragen jedoch diese schrägen Haltefasern mit dazu bei, dass die Rissbildung, die dem Bruch vorausgeht, gehemmt werden kann.

Die Vernadelung der drei Schichten bringt es mit sich, dass die nichtverfestigte Masse der Kernschicht nicht nur zwischen den beiden Aussenschichten gehalten wird, sondern auch an einem wesentlichen Verschieben in der Erstreckungsebene des Körpers gehindert wird. Dadurch ist es möglich, in den noch nichtverfestigten Körper quer zu seiner Erstreckungsebene Oeffnungen, wie Ausstanzungen, Schlitze oder dergleichen anzubringen, ohne dass wesentliche Mengen der Kernschicht aus dem Körper austreten können, und diese Masse von den Haltefasern zurückgehalten wird.

Ist der Körper mit einer Vielzahl von in zueinander parallelen Reihen angeordneten Schlitzen versehen, wobei die Schlitze benachbarter Reihen gegeneinander versetzt angeordnet sind, so kann der vernadelte Körper quer zur Erstreckungsrichtung der Schlitze oder länglichen Oeffnungen gedehnt werden. Ein solcher Körper ist im noch nichtverfestigten Zustand sehr flexibel, wodurch er sich besonders leicht auch grösseren Unebenheiten eines anderen Gegenstandes, auf dem er angebracht wird, anpasst.

Dieses « Dehnungsvermögen » kann aber auch dazu benutzt werden, den Körper unter weiterer Oeffnung der Oeffnungen, bzw. Schlitze im noch nichtverfestigten Zustand zu strecken, worauf er sich dann in diesem geöffneten Zustand verfestigt. Eine solche weite Oeffnungen aufweisende Platte, die in ihrem Aussehen dem bekannten Streckmetall sehr ähnlich ist, kann zum Abdecken von Lüftungsschächten oder dergleichen als Zaunelement, Sichtschutz usw. verwendet werden. Besonders geeignet ist sie als Schnee- oder Sandfang, da Sand oder Schnee beladene Luft beim Durchströmen dieses gitterförmigen Körpers aufgrund der plötzlichen Veränderung der Strömungsverhältnisse den Sand bzw. den Schnee verliert.

Weist der noch nichtverfestigte Schichtkörper mehrere, miteinander verbundene und zwischen sich einen Winkel einschliessende Oeffnungen oder Schlitze auf, so lassen sich die zwischen diesen bzw. Abschnitten derselben befindlichen laschenförmigen Teile des Schichtkörpers aus der Ebene desselben herausbiegen. Solche herausgebogenen Laschen dienen nach dem Verfestigen des Körpers z. B. als Haltelaschen, durch die aufgrund der Elastizität des Materials auch genagelt werden kann, oder graben sich in einen lockeren Boden ein, wenn diese Körper als Platten auf Sand oder Humusboden abgelegt werden, wobei dann die herausgebogenen Laschen ein Verrutschen dieser Platten verhindern.

Dieses Herausbiegen von Laschen kann auch durch Herausstanzen derselben vorgenommen werden, d. h., das Einbringen von Oeffnungen und das Herausbiegen der Laschen wird in einem Arbeitsgang durchgeführt.

Aufgrund des inneren Zusammenhaltes des genadelten, noch nichtverfestigten Schichtkörpers ist es insbesondere dann, wenn dieser mit Oeffnungen oder Schlitzen versehen ist, möglich, einen solchen vernadelten, noch nichtverfestigten Schichtkörper tief zu ziehen.

Gemäss einer bevorzugten Ausführungsform der Erfindung wird mindestens eine Oberfläche des noch nichtverfestigten Schichtkörpers strukturiert, wobei es sich dabei insbesondere um die Oberfläche handelt, die später, z. B. nach dem Einbau eines solchen Körpers in ein Gebäude oder dergleichen, nach aussen sichtbar bleibt. Eine solche Strukturierung kann durch Formkalandern oder Prägen vorgenommen werden, aufgrund des inneren Zusammenhaltes des genadelten Schichtkörpers ist es aber auch möglich, die Oberfläche des Schichtkörpers während des Verfestigungsprozesses mit einer Bürste aufzurauhen oder einzelne Faserenden aus der Fasern enthaltenden Schicht herauszuziehen. Die Strukturierung der Oberfläche lässt sich aber auch durch Aenderung der Konsistenz der aufzubringenden Kernschichtmasse verändern, da je nach Viskosität dieser Masse mehr oder weniger Bindemittel in und durch die Fasern enthaltende Schicht gelangt, d. h., dass beim Aufbringen einer relativ hochviskosen Kernschicht weniger Bindemittel an die Aussenflächen des Schichtkörpers gelangt, wodurch ein textiler Charakter an der Aussenseite des Körpers erhalten werden kann. Sind darüberhinaus die verwendeten Fasern gefärbt, so braucht ein so ausgebildeter plattenförmiger Körper, der z. B. als Wandelement verwendet wird, nicht mehr weiter bearbeitet zu werden. Durch Erniedrigen der Viskosität der aufzubringenden Kernschicht und durch Kalandern nach dem Vernadeln der Schichten dringt andererseits soviel Bindemittel durch die aussenliegenden, Fasern enthaltenden Schichten hindurch, dass diese völlig von dem Bindemittel, wie Zement, Gips, Kalk, Latex, Kautschuk, Hotmelt, Bitumen, Kunstharze oder dergleichen, eingeschlossen sind, und beim verfestigten Körper auf dessen Oberfläche im wesentlichen keine Fasern mehr sichtbar sind. Insoweit ähnelt z.- B. der ausgehärtete, Zement enthaltende Körper den bekannten Gegenständen aus Asbestfaserzement. Eine weitere Strukturierungsmöglichkeit besteht darin, auf einen vollflächigen, vernadelten, noch nichtverfestigten Schichtkörper einen zweiten Schichtkörper musterförmig, z. B. streifenförmig, punktförmig oder dergleichen aufzubringen und mit ersterem durch Vernadeln zu verbinden. Dadurch besteht die Möglichkeit, besonders erhabene Strukturen auszubilden.

Zwei oder mehrere vollflächige, nichtverfestigte Schichtkörper können aber auch aufeinandergelegt miteinander vernadelt werden, wodurch ein Schichtkörper mehrfacher Dicke erhalten werden kann, der schon vor dem Abbinden des Bindemittels einen eigenen inneren Zusammenhalt aufweist.

Aehnlich können auch Glaswolle- oder Steinwollematten oder Schaumstoffplatten mit vollflächigen, nichtverfestigten Schichtkörpern verbunden werden, wobei die Haltefasern aus den Schichtkörpern heraus in diese Matten oder Platten durch Nadeln hineingestossen werden. Wird eine solche Matte oder Platte beidseitig mit den Schichtkörpern bedeckt, so kann der dadurch entstandene, sandwichartige Gegenstand z. B. als Trennwand verwendet werden. Da solche Matten oder Platten, wie sich aus Vorhergehendem ergibt, passiv nadelfähig sind, können solche Matten auch von vornherein als passiv nadelfähige Unterlagsschicht für einen Schichtkörper verwendet werden.

Gemäss einer besonderen Ausführungsform der Erfindung wird der noch unvernadelte, nichtverfestigte Schichtkörper geformt, z. B. rinnenförmig, und erst in dieser Form vernadelt.

Gemäß einer weiteren Ausführungsform der Erfindung enthält die Kernschicht eine Kunststoffmasse in trockener, pulverförmiger Form, wobei es sich um eine Komponente eines Zweikomponentensystems oder um beide Komponenten eines Zweikomponentensystems handeln kann. Das System wird nach dem Vernadeln — gegebenenfalls nach Zugabe der zweiten Komponente — zur Reaktion gebracht.

Ausführungsbeispiele der Erfindung werden im Folgenden anhand der Zeichnung und anhand von Beispielen erläutert.

Es zeigt :

Figur 1 eine schematische Darstellung einer Anlage zur Durchführung des Verfahrens ;

Figur 2 eine schematische Darstellung des Schnittes durch einen vernadelten, noch nicht verfestigten Schichtkörper ;

Figur 3 eine schematische Darstellung eines Schnittes durch einen vernadelten und kalanderten Schichtkörper ;

Figur 4 einen Ausschnitt in Aufsicht auf einen mit geöffneten Schlitzen versehenen Schichtkörper in schematischer Darstellung ;

Figuren 5 und 6 zwei mögliche Ausbildungen von miteinander verbundenen Oeffnungen, die bzw. deren Abschnitte zwischen sich Laschen bilden ;

Figur 7 einen Schichtkörper gemäss Fig. 5 und 6 im Schnitt, bei dem die Laschen aus der Ebene des Schichtkörpers herausgebogen sind ;

Figur 8 einen flächigen Schichtkörper, auf den streifenförmige Schichtkörper aufgenadelt sind, und

Figur 9 eine Dämmplatte, auf deren beide Seiten erfindungsgemäss hergestellte Schichtkörper aufgenadelt sind.

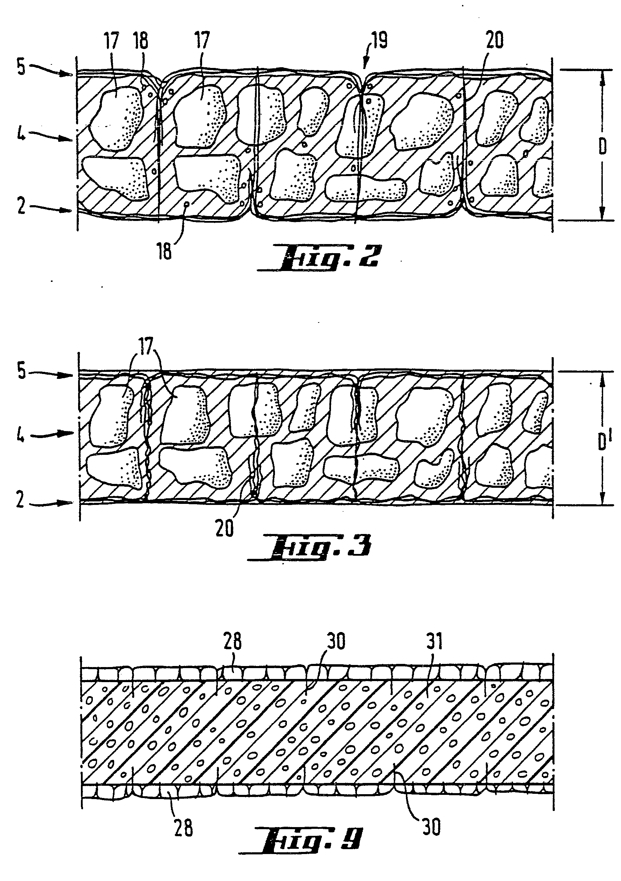

Gemäss Fig. 2 wird auf eine Fördereinrichtung, hier ein Förderband 1, eine Unterlagsschicht 2 abgelegt, auf die, von einer Austragsvorrichtung 3 dosiert, die Kernschicht 4 aufgetragen wird. Auf diese Kernschicht 4 werden aktiv nadelfähige Fasern, hier in Form eines Faservlieses 5 aufgelegt, worauf dieses Dreischichtensystem einer Nadelmaschine 6 zugeführt wird.

Solche Nadelmaschinen 6 sind aus der textilen Nadelfilztechnik bekannt (vgl. z. B. Krčma, Textilverbundstoffe, Seite 139 bis 141). Bei einer solchen Nadelmaschine 6 wird das zu vernadelnde System, hier das Dreischichtensystem, über eine mit Bohrungen versehene Grundplatte 7 geführt. Oberhalb des zu vernadelnden Gegenstandes ist ein die Vernadelungsnadeln 8 tragendes Nadelbrett 9 angeordnet, welches sich fortwährend so weit auf und ab bewegt (Doppelpfeil 10), dass die Nadelspitzen 11 in ihrer untersten Stellung den zu vernadelnden Gegenstand gewöhnlich ganz durchdrungen haben, während sie in ihrer obersten Stellung mit dem noch zu vernadelnden Gegenstand keine Berührung aufweisen. In dieser obersten Stellung kann der zu vernadelnde Gegenstand, hier das Dreischichtensystem, in Vorschubrichtung (Pfeil 12) taktweise verschoben werden, während es beim eigentlichen Vernadeln stillstehen muss. Die Vernadelungsnadeln 8 tragen an ihrem Schaft mindestens einen — hier zwei — Widerhaken 13, mit denen sie einzelne Fasern oder Faserbüscheln ergreifen und in den zu vernadelnden Gegenstand hineinziehen, bzw. durch diesen hindurchziehen. Beim Zurückfahren der Nadeln 8 lösen sich die mitgenommenen Fasern oder Faserbüschel von den Widerhaken 13 und verbleiben in der passiv vernadelten Schicht, hier der Unterlagsschicht 2 und der Kernschicht 4.

Während nun beim Vernadeln in der Textilindustrie, bei der Herstellung von Nadelfilzteppichen, die eine Enddicke von z. B. 4-6 mm aufweisen, die Nadelbretter 9 eine Vielzahl von dicht beieinander angeordneten Nadeln besitzen und dieses Nadelbrett z. B. mit einer Geschwindigkeit von 700 Hüben pro Minute bewegt werden kann, muss nun beim Vernadeln von noch nichtverfestigten Bindemitteln enthaltenden Schichten, in denen auch noch Füllstoffpartikel, wie Sandpartikel oder granuliertes Altgummi oder dergleichen eingelagert sind, die Dichte der Nadeln 8 in dem Nadelbrett 9 vergrössert und die Hubzahl stark verringert werden.

Sind diese Kriterien erfüllt und weist die noch frische Kernschicht die richtige Konsistenz auf, zu der noch Beispiele angeführt werden, so kann auch eine Füllstoffpartikel enthaltende Schicht passiv vernadelt werden. Das noch nichtverfestigte Bindemittel wirkt dabei auf der Oberfläche der Füllstoffpartikel als Schmier- und Gleitmittel, wodurch einerseits die Nadelspitzen an den Kornflächen entlang gleiten können, andererseits die Partikel innerhalb der Schicht geringfügig zur Seite ausweichen.

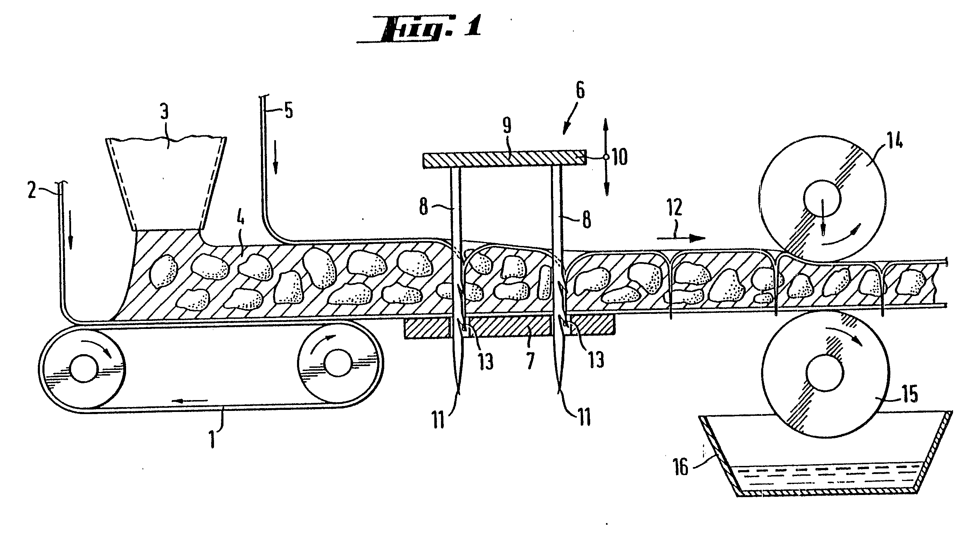

Wie aus Fig. 1 ersichtlich, verringert sich beim Vernadeln des Dreischichtensystems die Dicke desselben, da zum einen die Fasern enthaltende Schicht 5 durch das Vernadeln verdichtet wird, zum anderen diese Faserschicht 5 und, je nach Ausbildung, auch die Unterlagsschicht 2 in die Randbereiche der Kernschicht hineingezogen bzw. hineingedrückt wird.

Gemäss der in Fig. 1 dargestellten Ausführungsform der Anlage zum Durchführen des erfindungsgemässen Verfahrens wird der vernadelte Schichtkörper zwischen zwei Kalanderwalzen 14 und 15 hindurchgeführt, die eine weitere Verdichtung des Schichtkörpers bewirken, wodurch insbesondere die in der Kernschicht enthaltene Luft und überschüssiges Wasser oder Lösungsmittel herausgepresst werden. Zum Auffangen des überschüssigen Wassers oder Lösungsmittels ist hier eine Auffangwanne 16 vorgesehen, eine solche kann im übrigen auch unterhalb der Grundplatte 7 der Nadelmaschine 6 vorgesehen sein. Die beiden Kalanderwalzen 14 und 15 werden, zwischen sich den Schichtkörper führend und auf diesen einen Druck von 0,2-0,5 MPa ausübend, aufeinander zu gedrückt.

Die Fig. 2 und 3 zeigen in vergrösserter und schematischer Darstellung einen Schnitt durch einen vernadelten Schichtkörper, wobei Fig. 2 den Zustand nach dem Vernadeln, aber vor dem Kalandern und Fig. 3 den Zustand nach dem zusätzlichen Kalandern zeigen. Als Unterlagsschicht 2 wird gemäss den Fig. 2 und 3 ein aktiv vernadelbares Faservlies verwendet, das dem Faservlies 5 der Deckschicht entspricht. Die Kernschicht besteht hier aus Füllstoffpartikeln 17, die in das Bindemittel eingehüllt sind. Weiterhin sind der Fig. 2 noch einzelne Luftbläschen 18 entnehmbar, die sich insbesondere im Bereich der Einstichstellen der Vernadelungsnadeln 8 befinden. Im Bereich dieser Einstichstellen bilden sich auch « Fasertrichter » 19 aus. In diese Fasertrichter 19 werden auch Faserenden oder Faserteile von Fasern, die nicht durch die Widerhaken 13 ergriffen werden, teilweise hineingezogen. Das in der Kernschicht 4 enthaltene Bindemittel, in den Fig. 2 und 3 durch die Schraffur angedeutet, umschliesst sowohl die einzelnen Partikel 17, als auch die Haltefasern 20, sodass man in der Praxis dann, wenn man einen verfestigten Schichtkörper durchschneidet, viel weniger Partikel 17 und Haltefasern 20 erkennen kann, als in der Zeichnung dargestellt wird. Dies gilt insbesondere für die Haltefasern 20, die, um ein Brechen eines ausgehärteten Schichtkörpers zu erschweren, über die Fläche desselben ungleichmässig verteilt sind, weshalb bei einem Schnitt in der Praxis nur sehr wenig Fasern zu sehen sind.

Wie schon oben ausgeführt, ist die Dicke D' nach dem Kalandern des Schichtkörpers (Fig. 3) geringer, als die Dicke D vor dem Kalandern desselben (Fig. 2). Weitere Veränderungen des Schichtkörpers durch das Kalandern sind deutlich durch den Vergleich der Fig. 2 und 3 erkennbar ; so werden durch das Kalandern die Luftbläschen 18 entfernt, das Bindemittel hat die beiden aussenliegenden Faserschichten 2 und 5 durchdrungen und ist auch in die Fasertrichter 19 hineingedrungen. Die die beiden aussenliegenden Schichten 2 und 5 verbindenden Haltefasern 20 liegen hier in gestauchter Form vor, in der sie auch beim Verfestigen des Bindemittels von diesem abgebunden werden. Ob die Haltefasern 20 in gestauchter Form vorliegen, hängt zum einen von der gewählten Faserart, zum anderen von dem durch das Kalandern erfolgten bleibenden Veränderung des Schichtkörpers ab.

Die Fig. 1 bis 3 zeigen nun eine Kernschicht, die neben dem angesetzten, nichtverfestigten und somit noch flüssigen Bindemittel wie Zement, Gips, Kalk, Latex, Kautschuk, Hotmelt, Bitumen, oder Kunstharzen zusätzlich Füllkörper 17, wie Sandkörner, Schaumstoffkügelchen, granuliertes Gummi, wie Altgummi, oder dergleichen enthält.

Bei anderen Ausführungsformen wird auf diese Füllkörper verzichtet, d. h., auch die Kernschicht 4 besteht nur aus dem Bindemittel, wobei dann auf die Unterlagsschicht 2 der Bindemittelbrei aufgetragen wird, der dann mit der Unterlagsschicht 2, der Deckschicht 5 und den Haltefasern 20 abbindet.

Die Fig. 4 zeigt nun die Aufsicht auf einen Schichtkörper, der nach Art des bekannten, sogenannten Streckmetalls ausgebildet ist. Dazu wird der vernadelte, noch nichtverfestigte Schichtkörper mit in parallelen Reihen angeordneten Schlitzen 22 versehen, wobei die Schlitze benachbarter Reihen gegeneinander versetzt sind. Die Abstände zweier benachbarter Reihen von jeweils auf einer Linie liegenden Schlitzen 22 entsprechen hier etwa der Dicke des Schichtkörpers, während die Abstände zwischen zwei in einer Reihe liegender Schlitze 22 hier etwa der zweifachen Dicke des Körpers und die Länge der Schlitze etwa der dreifachen Dicke des Körpers entsprechen. Vor dem Verfestigen des geschlitzten Schichtkörpers wird dieser quer zur Erstreckungsrichtung der Schlitze gedehnt, so dass sich die Schlitze 22, wie in der Zeichnung dargestellt, zu linsenförmigen Oeffnungen ausbilden und in diesem Zustand endgültig verfestigen. Die zwischen den einzelnen Oeffnungen verbleibenden Stege 23 stellen sich dabei geringfügig auf, sodass der Querschnitt der Schlitze parallel zur Erstreckungsebene des Körpers in verschiedenen Lagen verschieden ausgebildet ist. Diese Oeffnungen 22 bilden dadurch in dem Schichtkörper sich verengende bzw. erweiternde Düsen, weshalb die Strömungsbedingungen von hindurch strömender Luft beim Durchströmen eines solchen Schichtkörpers verändert werden.

Ein so ausgebildeter Schichtkörper eignet sich somit besonders gut als Sand- oder Schneefang.

Gemäss einer anderen nicht dargestellten Ausführungsform entspricht der Abstand zweier Reihen paralleler Schlitze und der Abstand zweier Schlitze einer Reihe etwa dem drei- bis fünffachen der Dicke des Schichtkörpers, während die Länge der einzelnen Schlitze 22 etwa dem zwei- bis dreifachen der vorgenannten Abstände entspricht. Ein so ausgebildeter Schichtkörper wurde dann quer zur Erstreckungsrichtung unter Oeffnung der Schlitze 22 gedehnt und dann kalandert. Es ergaben sich dabei linsenförmige Oeffnungen 22, deren Querschnitt über die gesamte Dicke des Schichtkörpers konstant blieb, wobei Oeffnungskanten entstanden, die so glatt waren, als wären die Oeffnungen aus dem verfestigten Körper ausgestanzt worden.

Während beim Schlitzen und nachträglichen Strecken des Schichtkörpers kein Materialverlust auftritt, werden gemäss einer anderen Ausführungsform der Erfindung die Oeffnungen 22 in der gewünschten Form, sei es wie in Fig. 4 linsenförmig oder kreisförmig (nicht dargestellt) ausgestanzt. Dabei bleibt der Querschnitt der ausgestanzten Oeffnung über die Dicke des Materials konstant.

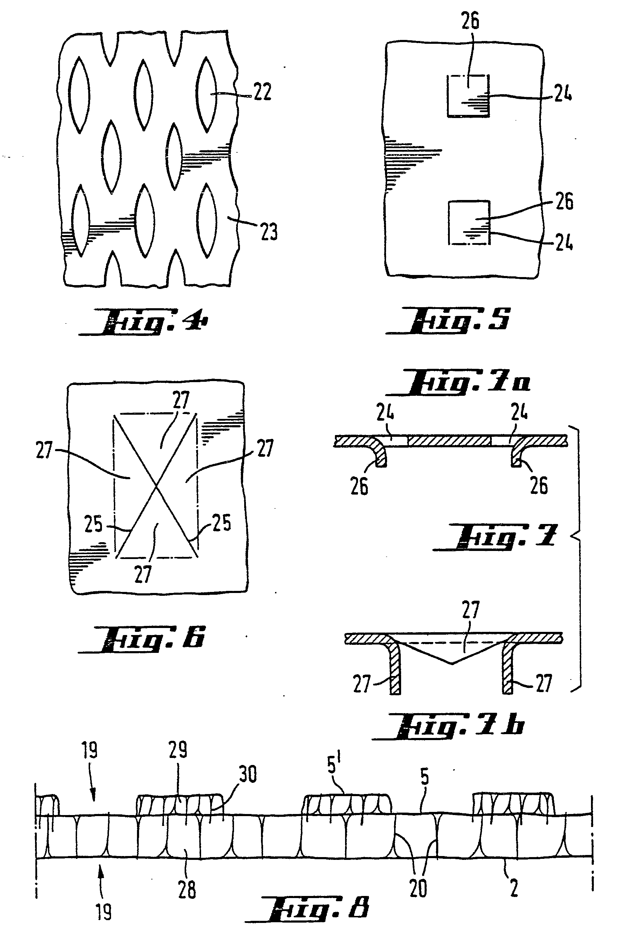

Bei der Ausführungsform des Schichtkörpers gemäss Fig. 5 sind in diesen U-förmige Schlitze eingebracht. Gemäss der Ausbildung nach Fig. 6 sind zwei sich kreuzende, ein « X » bildende Schlitze 25 vorgesehen. Zwischen den Schlitzen 24 bzw. den Abschnitten der Schlitze 25 verbleibt eine Lasche 26 bzw. verbleiben vier Laschen 27, die aus der Erstreckungsebene des Körpers in einem weiteren Verfahrensschritt herausgebogen werden, wie dies in Fig. 7 anhand eines Querschnitts durch den Körper dargestellt ist.

Anstelle des Schlitzens und darauf erfolgenden Herausbiegens der Laschen 26 und 27 werden gemäss einer anderen Ausführungsform des Verfahrens die Laschen in einem Arbeitsgang aus- und umgestanzt.

Fig. 8 zeigt nun einen ersten, flächigen Schichtkörper 28, auf den im noch nichtverfestigten Zustand weitere, hier streifenförmige, genadelte und noch nichtverfestigte Schichtkörper 29 aufgenadelt sind. Der flächige Schichtkörper 28 ist von beiden Seiten her vernadelt, was durch die angedeuteten Fasertrichter 19 und die Haltefasern 20 dargestellt ist. Der besseren Uebersicht halber ist in Fig. 8 die zwischen der Unterlagsschicht 2 und der Deckschicht 5 befindliche Kernschicht, die der Kernschicht der Fig. 2 entspricht, nicht dargestellt.

Die weiteren, streifenförmigen Schichtkörper 29 entsprechen in ihrem Aufbau dem flächigen Schichtkörper 28, sie weisen jedoch hier nur eine Dicke auf, die etwa der halben Dicke des Schichtkörpers 28 entspricht.

Diese streifenförmigen Schichtkörper 29 werden beabstandet voneinander auf den flächigen Schichtkörper 28 aufgelegt und dann mit diesem vernadelt, wobei die Vernadelungsnadeln von der Deckschicht 5' der streifenförmigen Schichtkörper 29 hereinstossen, aus dieser Deckschicht 5' Haltefasern 30 mitnehmen und diese sowohl durch die Unterlagsschicht der streifenförmigen Schichtkörper 29, als auch durch die Deckschicht 5 des flächenförmigen Schichtkörpers 28 in die Kernschicht des letzteren hineinstossen.

Gemäss einer nicht dargestellten Ausführungsform werden nach dem anhand der Fig. 8 beschriebenen Verfahren auch zwei oder mehrere identische, flächige Schichtkörper 28 aufeinander gelegt und miteinander vernadelt. Durch mehrfaches Aufeinanderlegen von Schichtkörpern 28 und Vernadeln derselben, auch durch mehr als zwei Schichtkörper 28 hindurch, lässt sich ein Schichtkörper beliebiger Dicke herstellen.

Anstelle der streifenförmigen Schichtkörper 29, die auf den flächenförmigen Schichtkörper 28 aufgenadelt werden, können auch musterbildend Schichtkörper 29 mit anderen Flächen, z. B. kreisförmig oder quadratisch, aufgenadelt werden, je nach dem, welche Struktur das fertige Produkt aufweisen soll.

Fig. 9 zeigt nun einen Querschnitt durch eine sandwichartig aufgebaute Platte, deren Kern aus einer Schaumstoffplatte 31 besteht, auf deren beide Flächen flächige Schichtkörper 28, die denen der Fig. 8 entsprechen, mittels Haltefasern 30 aufgenadelt sind. Wird dabei die Unterlagsschicht 2 der vorher nicht kalanderten Schichtkörper 28 auf die Schaumstoffplatte 31 aufgelegt, so kann das fertige Produkt ohne weitere Behandlung als Trennwand oder dergleichen in Gebäuden benutzt werden, deren Oberfläche den Eindruck eines Nadelfilzteppiches vermittelt. Dies wird insbesondere dann betont, wenn für die Herstellung des Schichtkörpers 28 in der Deckschicht 5 farbige Fasern verwendet werden. Durch das Einbringen der Haltefasern 30 aus dem Schichtkörper 28 in die Schaumstoffplatte 31 hinein erhält man eine weitere Strukturausbildung, wenn die dabei entstandenen Fasertrichter nicht mit Bindemittel gefüllt werden.

Die Zusammensetzung und der Aufbau einiger, nach dem erfindungsgemässen Verfahren hergestellter Schichtkörper ergibt sich aus folgenden Beispielen.

### Beispiel 1

Zur Herstellung der Deckschicht und der identischen Unterlagsschicht wurde ein Vlies aus Polyesterfasern mit einem Flächengewicht von 200 $g/m^2$ und einem Titer von 17 dtex auf einen Bafatexträger mit einem Flächengewicht von 25 $g/m^2$ abgelegt und mit diesem mit einer Stichdichte von 48 Stichen/$cm^2$ vorvernadelt.

Für die Kernschicht wurden 10 Gewichtsteile Portlandzement, 10 Gewichtsteile Bausand mit einer Körnung von 0,1 bis 1 mm, 5 Gewichtsteile Wasser und 1 Gewichtsteil Vinnapas RE 926 Z gemischt.

Dieses Gemisch wurde mit einem Flächengewicht von etwa 9,3 $kg/m^2$ auf der Unterlagsschicht gleichmässig verteilt und mit der Deckschicht abgedeckt.

Dieses Dreischichtensystem wurde in einer Nadelmaschine von beiden Seiten her vernadelt, wobei die Stichdichte jeder Seite 24 Stiche/$cm^2$ betrug. Der vernadelte Schichtkörper wurde in einer Presse mit einem Druck von 0,4 MPa 48 Stunden lang gepresst und härtete dann innerhalb von 20 Tagen bei Raumtemperatur aus.

Bei dieser Vorgehensweise wurde eine 4 mm dicke Platte erhalten, die von aussen einen weitgehend homogenen Faserbetonkörper darstellte, deren Innenaufbau dreischichtig, nämlich zwischen zwei aussenliegenden Faserbetonschichten eine die Haltefasern aufweisende Sandbetonschicht, ausgebildet war.

### Beispiel 2

Zur Herstellung der Deckschicht und der Unterlagsschicht wurde hier ein Vlies aus Polypropylen mit einem Flächengewicht von 80 $g/m^2$, einem Titer von 17 dtex und einer Stapellänge von 90 mm auf einen Bafatexträger mit einem Flächengewicht von 25 $g/m^2$ abgelegt und wieder mit einer Stichdichte von 48 Stichen/$cm^2$ vorvernadelt. Die Kernschicht hatte die gleiche Zusammensetzung wie die Kernschicht des Musters 1, die Vernadelung, das Pressen und das Trocknen erfolgten genauso wie im Beispiel 1.

Es wurde wieder ein dreischichtiger Körper erhalten, dessen Aufbau und Aussehen dem des Beispieles 1 entsprach. Die Biegefestigkeit dieses zweiten Musters betrug jedoch nur etwa 3/4 der Biegefestigkeit des ersten Musters.

### Beispiel 3

Zur Herstellung der Deck- und Unterlagsschicht wurde ein Vlies aus Polyesterfasern mit einem Flächengewicht von 80 $g/m^2$ auf einen Bafatexträger mit einem Flächengewicht von 25 $g/m^2$ abgelegt. Es wurden hier verschiedene Polyesterfasern verwendet und zwar lag folgende Mischung vor : 30 g mit einem Titer von 4,4 dtex und einer Stapellänge von 100 mm, 30 g mit einem Titer von 6 dtex und einer Stapellänge von 60 mm und 20 g mit einem Titer von 15 dtex und einer Stapellänge von 76 mm. Auch hier wurde mit einer Stichdichte von 48 Stichen/cm² vorvernadelt.

Für die Kernschicht wurde ein Gemisch aus 2 Gewichtsteilen Portlandzement, 3 Gewichtsteilen Papierschnitzel (Zeitungspapier) und 7 Gewichtsteilen Wasser verwendet. Dieses Gemisch wurde mit einem Flächengewicht von etwa 5,7 kg/m² zwischen die beiden Aussenschichten gebracht, woraufhin das Dreischichtensystem, wie zuvor beschrieben, von zwei Seiten her vernadelt wurde. Der vernadelte Schichtkörper wurde wieder 48 Stunden mit einem Druck von 0,4 MPa gepresst, wobei die Presse während der ersten zwei Stunden Presszeit auf 100 °C erhitzt wurde und der Schichtkörper insgesamt 6 Tage austrocknete.

Man erhielt eine klopffeste Platte, deren beiden Oberflächen aus Fasern bestanden.

Beispiel 4

Für die Herstellung der Deck- und Unterlagsschicht wurde ein Gemisch von Polyamidfasern mit einer Stapellänge von 80 mm, davon 60 g mit einem Titer von 6,7 dtex und 20 g mit einem Titer von 17 dtex auf einen Bafatexträger mit einem Flächengewicht von 25 g/m² abgelegt und wieder mit einer Stichdichte von 48 Stichen/cm² vorvernadelt. Für die Kernschicht wurden 10 Gewichtsteile Latex, 10 Gewichtsteile Altgummigranulat mit einer Korngrösse von 1-4 mm, 10 Gewichtsteile Portlandzement und 8 Gewichtsteile Wasser gemischt. Dieses Gemisch wurde mit einem Flächengewicht von 8 kg/m² zwischen die beiden Faserschichten gebracht, und, wie oben beschrieben, von beiden Seiten her vernadelt. Der vernadelte Schichtkörper wurde dann 18 Stunden lang bei 130 °C getrocknet und man erhielt eine 8 mm dicke, elastische Platte mit einer Faseroberfläche.

Beispiel 5

Für eine Kernschicht wurden 17 Gewichtsteile Bitumen, 3 Gewichtsteile Latex und 12 Gewichtsteile Gummimehl mit einer Körnung von 0,2-0,8 mm oberhalb einer Temperatur von 200° gemischt, zwischen eine Unterlags- und eine Deckschicht gemäss dem Beispiel 4 gebracht und in einer vorgeheizten Nadelmaschine bei einer Temperatur von über 200° wie zuvor beschrieben vernadelt.

Aus den vorstehend beschriebenen fünf Beispielen ergibt sich, dass, je nachdem, wie die einzelnen Schichten zusammengesetzt sind, mit dem erfindungsgemässen Verfahren verschieden ausgebildete Platten erhalten werden können.

In Bezug auf Gummi gibt es für die Ausbildung der Kernschicht verschiedene Möglichkeiten, so kann granuliertes Altgummi von Latex kalt abgebunden werden, Gummikörner oder Gummimehl kann mit Bitumen oder Hotmelt gemischt werden oder es wird als Kernschicht eine mastifizierte Gummimasse verwendet, die nach dem Vernadeln vulkanisiert wird. Es können aber auch heisse, thermoplastische Kautschukmassen vernadelt werden, die nach dem Vernadeln abkühlen und mit den Fasern abbinden. Als Kernschicht können aber auch mit Sand und Katalysatoren versetzte Kunstharze, wie Acrylate, verwendet werden, die erst kurze Zeit vor dem Einbringen miteinander gemischt werden und nach dem Vernadeln polymerisieren.

**Patentansprüche**

1. Verfahren zur Herstellung von faserverstärkten, ein verfestigbares Bindemittel enthaltenden, flächigen Körpern, bei dem eine das Bindemittel enthaltende, fließfähige, nichtverfestigte Kernschicht zwischen eine Unterlagsschicht und eine Deckschicht gebracht wird, dadurch gekennzeichnet, daß die drei Schichten, von denen mindestens eine äußere aus aktiv nadelfähigen Fasern besteht, bei nichtverfestigten Bindemittel durch Vernadeln derart miteinander verbunden werden, daß die Schichten im verformbaren Zustand zusammenhalten, woraufhin das Bindemittel in den verfestigten Zustand überführt wird.

2. Verfahren nach Anspruch 1, dadurch gekennzeichnet, daß die Schichten durch der Deckschicht und der Unterlagsschicht entnommene Haltefasern vernadelt werden.

3. Verfahren nach Anspruch 1 oder 2, dadurch gekennzeichnet, daß die Haltefasern unter einem Winkel von kleiner als 90° zur Erstreckungsebene des Körpers eingestoßen werden.

4. Verfahren nach Anspruch 3, dadurch gekennzeichnet, daß die Haltefasern sowohl von der Deckschicht, als auch von der Unterlagsschicht her eingestoßen werden und zueinander windschief ausgerichtet sind.

5. Verfahren nach einem der vorhergehenden Ansprüche, dadurch gekennzeichnet, dass der vernadelte, noch nichtverfestigte Schichtkörper mit Oeffnungen, vorzugsweise Schlitzen, versehen wird.

6. Verfahren nach Anspruch 5, dadurch gekennzeichnet, dass der Schichtkörper mit einer Vielzahl von in zueinander parallelen Reihen angeordneten Schlitzen versehen wird, wobei die Schlitze benachbarter Reihen gegeneinander versetzt angeordnet sind.

7. Verfahren nach Anspruch 5 oder 6, dadurch gekennzeichnet, dass der vernadelte und mit länglichen Oeffnungen oder Schlitzen versehene Schichtkörper quer zur Erstreckungsrichtung der Oeffnungen oder Schlitze gedehnt wird.

8. Verfahren nach einem der vorhergehenden Ansprüche, dadurch gekennzeichnet, dass der an sich ebene, noch nichtverfestigte Schichtkörper aus dieser Ebene heraus verformt wird.

9. Verfahren nach einem der vorhergehenden Ansprüche, dadurch gekennzeichnet, dass der noch nichtverfestigte Schichtkörper mit mehreren, miteinander verbundenen und zwischen sich einen Winkel einschliessenden Oeffnungen oder Schlitzen versehen wird.

10. Verfahren nach Anspruch 9, dadurch gekennzeichnet, dass die zwischen einzelnen Oeffnungen oder Schlitzen bzw. Abschnitten derselben gebildeten Laschen aus der Ebene des Schichtkörpers herausgebogen werden.

11. Verfahren nach einem der vorhergehenden Ansprüche, dadurch gekennzeichnet, dass einzelne Flächenbereiche des Schichtkörpers aus dem noch nichtverfestigten Körper durch Stanzen aus der Erstreckungsebene des Schichtkörpers herausgebogen werden.

12. Verfahren nach einem der vorhergehenden Ansprüche, dadurch gekennzeichnet, dass der noch nichtverfestigte, vernadelte Schichtkörper in einer Form tiefgezogen wird.

13. Verfahren nach einem der vorhergehenden Ansprüche, dadurch gekennzeichnet, dass mindestens eine Oberfläche des noch nichtverfestigten Schichtkörpers strukturiert wird.

14. Verfahren nach einem der vorhergehenden Ansprüche, insbesondere nach Anspruch 13, dadurch gekennzeichnet, dass der noch nichtverfestigte Schichtkörper kalandert, insbesondere formkalandert wird.

15. Verfahren nach Anspruch 13, dadurch gekennzeichnet, dass die Oberfläche des Schichtkörpers während des Verfestigungsprozesses, vorzugsweise mit einer Bürste, aufgerauht wird.

16. Verfahren nach Anspruch 13, dadurch gekennzeichnet, dass während des Verfestigungsprozesses des Schichtkörpers einzelne Faserenden aus der oder den Fasern enthaltenden Schicht bzw. Schichten herausgezogen werden.

17. Verfahren nach einem der vorhergehenden Ansprüche, dadurch gekennzeichnet, dass zwei noch nichtverfestigte Schichtkörper durch Vernadeln miteinander verbunden werden.

18. Verfahren nach einem der Ansprüche 1 bis 16, dadurch gekennzeichnet, dass mindestens ein Schichtkörper flächig mit einem anderen, insbesondere flächigen Körper durch Vernadeln verbunden wird.

19. Verfahren nach einem der Ansprüche 1 bis 4, dadurch gekennzeichnet, dass der noch unvernadelte Schichtkörper zu einer Form geformt wird und die Schichten in dieser Form durch Vernadeln verbunden werden.

20. Verfahren nach einem der vorhergehenden Ansprüche, dadurch gekennzeichnet, dass die Kernschicht ein hydraulisches Bindemittel enthält.

21. Verfahren nach Anspruch 20, dadurch gekennzeichnet, dass als Kernschicht ein Bindemittel-Wasser-Gemisch, vorzugsweise ein Bindemittel-Füllstoff-Wasser-Gemisch verwendet wird.

22. Verfahren nach Anspruch 21, dadurch gekennzeichnet, dass als Bindemittel Zement und als Füllstoff Sand verwendet wird.

23. Verfahren nach Anspruch 21, dadurch gekennzeichnet, dass als Bindemittel Gips oder Kalk verwendet wird.

24. Verfahren nach Anspruch 20, dadurch gekennzeichnet, dass der vernadelte Schichtkörper mit Wasser befeuchtet wird.

25. Verfahren nach einem der Ansprüche 1-19, dadurch gekennzeichnet, dass die Kernschicht zähflüssige Kautschukmassen enthält.

26. Verfahren nach einem der Ansprüche 1-19, dadurch gekennzeichnet, dass die Kernschicht zähflüssige Bitumenmassen enthält.

27. Verfahren nach einem der vorhergehenden Ansprüche, dadurch gekennzeichnet, dass die Kernschicht zähflüssige Kunstharzmassen enthält.

28. Verfahren nach einem der Ansprüche 1-19, dadurch gekennzeichnet, dass die Kernschicht eine Kunststoffmasse in trockener, pulverförmiger Form, z. B. eine Komponente eines Zweikomponenten-Systems enthält und die zweite Komponente dieses Systems nach dem Vernadeln in den Schichtkörper eingebracht wird.

29. Verfahren nach einem der Ansprüche 1-19, dadurch gekennzeichnet, dass die Kernschicht eine Kunststoffmasse in trockener, pulverförmiger Form, z. B. beide Komponenten eines Zweikomponenten-Systems enthält, und dieses Zweikomponenten-System erst nach dem Vernadeln zur Reaktion gebracht wird.

## Claims

1. Method of producing fibre-reinforced flat bodies containing a hardenable binder wherein a flowable unhardened core layer containing the binder is introduced between a backing layer and a cover layer characterised in that the three layers of which at least one outer layer comprises fibres which are capable of active needle bonding, are needle bonded prior to the hardening of the binder so that the layers are held together by the fibres in the deformable state whereupon the binder is converted into the hardened state.

2. Method according to Claim 1, characterised in that the layers are needle bonded by means of holding fibres taken from the cover layer and the backing layer.

3. Method according to Claim 1 or 2, characterised in that the holding fibres are inserted at an angle less than 90° to the principal plane of the body.

4. Method according to Claim 3, characterised in that the holding fibres are inserted both from the side of the cover layer and the backing layer and are skewed with respect to each other.

5. Method according to one of the foregoing Claims, characterised in that the needle bonded composite body is provided with orifices, preferably slits prior to hardening.

6. Method according to Claim 5, characterised in that the composite body is provided with a plurality of slits arranged in parallel rows, with the slits of adjacent rows being offset with respect to each other.

7. Method according to Claim 5 or 6, characterised in that the needle bonded composite body provided with elongated orifices or slits is expanded transversely to the longitudinal direction of the orifices or slits.

8. Method according to one of the foregoing Claims, characterised in that the composite body, flat in itself, is deformed from this plane prior to hardening.

9. Method according to one of the foregoing Claims, characterised in that the composite body is provided prior to hardening with several interconnected orifices or slits, said orifices including an angle between themselves.

10. Method according to Claim 9, characterised in that tabs formed between the individual orifices or slits or their sections are bent out from the plane of the composite body.

11. Method according to one of the foregoing Claims, characterised in that individual surface areas of the composite body are bent out from the plane of the body prior to hardening by punching.

12. Method according to one of the foregoing Claims, characterised in that the needle bonded composite is deep drawn in a die prior to hardening.

13. Method according to one of the foregoing Claims, characterised in that at least one surface of the composite body is structured prior to hardening.

14. Method according to one of the foregoing Claims and especially to Claim 13, characterised in that the composite body is calendered, in particular pattern calendered, prior to hardening.

15. Method according to Claim 13, characterised in that the surface of the composite body is roughened during the hardening process, preferably by means of a brush.

16. Method according to Claim 13, characterised in that during the hardening process of the composite body, individual fibre ends are drawn out from the layer or layers containing the fibres.

17. Method according to one of the foregoing Claims, characterised in that two composite bodies are needle bonded together prior to hardening.

18. Method according to one of the Claims 1 to 16, characterised in that at least one composite body is needle bonded to another, specifically flat body.

19. Method according to one of the Claims 1 to 4, characterised in that the unbonded composite is formed into a configuration and the layers needle bonded in this configuration.

20. Method according to one of the foregoing Claims, characterised in that the core layer contains a hydraulic binder.

21. Method according to Claim 20, characterised in that a mixture or a binder and water, preferably a mixture of the binder, a filler and water, is used as the core layer.

22. Method according to Claim 21, characterised in that cement is used as the binder and sand as the filler.

23. Method according to Claim 21, characterised in that gypsum or lime is used as the binder.

24. Method according to Claim 20, characterised in that the bonded composite body is wetted with water.

25. Method according to one of the Claims 1 to 19, characterised in that the core layer contains highly viscous rubber masses.

26. Method according to one of the Claims 1 to 19, characterised in that the core layer contains highly viscous bitumen masses.

27. Method according to one of the foregoing Claims, characterised in that the core layer contains highly viscous synthetic resin masses.

28. Method according to one of the Claims 1 to 19, characterised in that the core layer contains a synthetic material mass in the dry, powder form, e. g. a component of a two-component system with a second component of this system being introduced after needle bonding into the composite body.

29. Method according to one of the Claims 1 to 19, characterised in that the core layer contains a synthetic material mass in a dry powder form, e. g. two components of a two-component system which is reacted only after needle bonding.

## Revendications

1. Procédé pour la fabrication des corps plats renforcés de fibres et contenant un liant durcissable, dans lequel une couche de noyau fluide et non durcie, contenant le liant est disposée entre une couche d'appui et une couche de couverture, caractérisé en ce que les trois couches, dont au moins une couche extérieure se compose de fibres activement aiguilletables, sont reliées les unes aux autres par aiguilletage lorsque le liant n'est pas durci, de façon que les couches se maintiennent ensemble à l'état déformable, le liant étant ensuite amené à l'état durci.

2. Procédé selon la revendication 1, caractérisé en ce que les couches sont aiguilletées par des fibres de retenue prélevées de la couche de couverture et de la couche d'appui.

3. Procédé selon l'une quelconque des revendications 1 et 2, caractérisé en ce que les fibres de retenue sont enfoncées suivant un angle plus petit que 90° par rapport au plan d'extension du corps.

4. Procédé selon la revendication 3, caractérisé en ce que les fibres de retenue sont enfoncées tant à partir de la couche de couverture qu'à partir de la couche d'appui et sont alignées à l'état gauchi les unes par rapport aux autres.

5. Procédé selon l'une quelconque des revendications 1 à 4, caractérisé en ce que le corps formé de couches, aiguilleté et non encore durci est muni d'ouvertures, de préférence de fentes.

6. Procédé selon la revendication 5, caractérisé en ce que le corps formé de couches est pourvu d'un grand nombre de fentes disposées en rangées parallèles entre elles, les fentes des rangées voisines étant décalées réciproquement.

7. Procédé selon l'une quelconque des revendications 5 et 6, caractérisé en ce que le corps formé de couches, aiguilleté et pourvu de fentes ou d'ouvertures oblongues, est allongé transversalement au sens de l'extension des ouvertures ou des fentes.

8. Procédé selon l'une quelconque des revendications 1 à 7, caractérisé en ce que le corps formé de couches, plan et non encore durci, est déformé à partir de ce plan.

9. Procédé selon l'une quelconque des revendications 1 à 8, caractérisé en ce que le corps formé de couches, non encore durci est pourvu de plusieurs ouvertures ou fentes reliées les uns aux autres et enfermant entre elles un angle.

10. Procédé selon la revendication 9, caractérisé en ce que les attaches formées entre les différentes ouvertures ou fentes ou les sections de celles-ci sont pliées extérieurement à partir du plan du corps formé de couches.

11. Procédé selon l'une quelconque des revendications 1 à 10, caractérisé en ce que différentes zones de surface du corps formé de couches sont pliées extérieurement depuis le corps non encore durci par découpage à partir du plan d'extension dudit corps formé de couches.

12. Procédé selon l'une quelconque des revendications 1 à 11, caractérisé en ce que le corps formé de couches, aiguilleté, mais non encore durci est embouti dans un moule.

13. Procédé selon l'une quelconque des revendications 1 à 12, caractérisé en ce qu'au moins une surface du corps formé de couches, non encore durci, est structurée.

14. Procédé selon l'une quelconque des revendications 1 à 13, en particulier la revendication 13, caractérisé en ce que le corps formé de couches, non encore durci est calandré, en particulier subit un calandrageformage.

15. Procédé selon la revendication 13, caractérisé en ce que la surface du corps formé de couches est rendue rugueuse durant le processus de durcissement, de préférence à l'aide d'une brosse.

16. Procédé selon la revendication 13, caractérisé en ce que différentes extrémités de fibres sont extraites de la ou des couches contenant des fibres pendant le processus de durcissement.

17. Procédé selon l'une quelconque des revendications 1 à 16, caractérisé en ce que deux objets formés de couches, non encore durcis sont reliés l'un à l'autre par aiguilletage.

18. Procédé selon l'une quelconque des revendications 1 à 16, caractérisé en ce qu'au moins un corps formé de couches est relié par aiguilletage à l'état plat à un autre corps en particulier plat.

19. Procédé selon l'une quelconque des revendications 1 à 4, caractérisé en ce que le corps formé de couches, non encore aiguilleté est façonné sous une forme et en ce que les couches sont reliées sous cette forme par aiguilletage.

20. Procédé selon l'une quelconque des revendications 1 à 19, caractérisé en ce que la couche de noyau contient un liant hydraulique.

21. Procédé selon la revendication 20, caractérisé en ce qu'on utilise, comme couche de noyau, un mélange liant-eau, de préférence un mélange liant-charge-eau.

22. Procédé selon la revendication 21, caractérisé en ce que du ciment est utilisé comme liant et du sable, comme charge.

23. Procédé selon la revendication 21, caractérisé en ce que du gypse ou de la chaux est utilisé comme liant.

24. Procédé selon la revendication 20, caractérisé en ce que le corps formé de couches et aiguilleté est mouillé avec de l'eau.

25. Procédé selon l'une quelconque des revendications 1 à 19, caractérisé en ce que la couche de noyau contient des pâtes de caoutchouc visqueuses.

26. Procédé selon l'une quelconque des revendications 1 à 19, caractérisé en ce que la couche de noyau contient des masses de bitume visqueuses.

27. Procédé selon l'une quelconque des revendications 1 à 26, caractérisé en ce que la couche de noyau contient des résines synthétiques visqueuses.

28. Procédé selon l'une quelconque des revendications 1 à 19, caractérisé en ce que la couche de noyau contient une matière synthétique sous une forme sèche et pulvérulente, par exemple, un composant d'un système à deux composants ; et en ce que le deuxième composant de ce système est introduit dans le corps formé de couches après l'aiguilletage.

29. Procédé selon l'une quelconque des revendications 1 à 19, caractérisé en ce que la couche de noyau contient une matière synthétique sous une forme sèche et pulvérulente, par exemple, deux composants d'un système à deux composants ; et en ce que ce système à deux composants n'entre en réaction qu'après l'aiguilletage.

**Fig. 1**

Fig. 2

Fig. 3

Fig. 9

_Fig. 4_

_Fig. 5_

_Fig. 7a_

_Fig. 6_

_Fig. 7_

_Fig. 7b_

_Fig. 8_